# EUROPÄISCHE PATENTSCHRIFT

(11) **EP 2 721 704 B1**
(45) Veröffentlichungstag und Bekanntmachung des Hinweises auf die Patenterteilung: **25.03.2015**
(21) Anmeldenummer: 12724602.3
(22) Anmeldetag: 23.05.2012
(51) Int. Cl.: H02J 1/00

(54) **VORRICHTUNG UND VERFAHREN ZUR VERBINDUNG VON MEHRSPANNUNGSBORDNETZEN**
APPARATUS AND METHOD FOR COUPLING VEHICLE GRIDS HAVING SEVERAL VOLTAGES
DISPOSITIF ET PROCÉDÉ POUR COUPLER DES GRILLES AYANT DES TENSIONS DIFFÉRENTES

(30) Priorität: 17.06.2011 DE 102011077704; 22.05.2012 DE 102012208520
(43) Veröffentlichungstag der Anmeldung: 23.04.2014
(73) Patentinhaber: Robert Bosch GmbH, 70442 Stuttgart (DE)
(72) Erfinder: WALENTA, Sebastian, 70439 Stuttgart (DE); PISCHKE, Ulf, 70569 Stuttgart (DE); DRAESE, Nils, 70469 Feuerbach (DE)
(86) Internationale Anmeldenummer: PCT/EP2012/059583
(87) Internationale Veröffentlichungsnummer: WO 2012/171766

(56) Entgegenhaltungen:
- DE-A1-102006 016 186
- DE-A1-102007 029 025
- DE-A1-102007 037 937

## Beschreibung

### Stand der Technik

Die Erfindung geht aus von einer Vorrichtung und einem Verfahren zur Verbindung von Mehrspannungsbordnetzen nach der Gattung der unabhängigen Ansprüchen.

Aus der EP 1145416 B1 ist bereits ein Umrichter für die Umformung von elektrischer Energie bekannt. So wird hier vorgeschlagen, dass die Drosselgröße durch die Verwendung von gekoppelten Induktivitäten reduziert werden kann. Hierbei sollen die gekoppelten Drosseln so dimensioniert werden, dass die Lastströme der Teilzweige sich gegenseitig kompensieren und zu keiner magnetischen Belastung der Drossel führen. Nur der Differenzstrom zwischen den einzelnen Teilzweigen führt dann zu einem magnetischen Feld.

Es ist Aufgabe der vorliegenden Erfindung, eine Vorrichtung und ein Verfahren zur Verbindung von Mehrspannungsbordnetzen anzugeben, die sich durch einfachen Schaltungsaufbau und einfache Betriebsweise auszeichnen. Diese Aufgabe wird gelöst durch die Merkmale der unabhängigen Ansprüche.

### Vorteile der Erfindung

Erfindungsgemäße Vorrichtung und erfindungsgemäßes Verfahren zur Verbindung von Mehrspannungsbordnetzen haben demgegenüber den Vorteil, dass durch besonders einfache Maßnahmen auch im Reversebetrieb eines Gleichspannungswandlers, insbesondere eines bidirektionalen DrosselTiefsetzstellers, eine Aufladung eines Energiespeichers auf der Primärseite

Aus der DE 10 2007 037 937 A1 ist bereits ein Kraftfahrzeugbordnetz mit einem ersten Bordnetz 2 bekannt, welches einen ersten Verbraucher und eine parallel dazu geschaltete Spannungsquelle enthält. Ein zweiter Bordnetzzweig ist durch einen Gleichspannungswandler mit dem ersten Bordnetzzweig koppelbar. Eine erste Schalteinrichtung verbindet einen zweiten Verbraucher mit dem ersten Bordnetzzweig oder alternativ dazu mit dem zweiten Bordnetzzweig. Ein dritter Verbraucher ist durch eine zweite Schalteinrichtung mit dem ersten Bordnetzzweig oder alternativ dazu mit dem zweiten Bordnetzzweig koppelbar. erfolgen kann, selbst wenn die primärseitige Spannung unterhalb der Sekundärspannung liegt. Hierbei können aufwändige Zusatzmaßnahmen entfallen. Auch bei unterschiedlichen Bordnetztopologien können erfindungsgemäß zwei Bordnetze sicher und zuverlässig ohne Stromspitzen miteinander verbunden werden.

In einer zweckmäßigen Weiterbildung ist als Lademittel zumindest eine Stromquelle, vorzugsweise eine Konstantstromquelle vorgesehen. Diese Realisierung zeichnet sich durch einen besonders einfachen Schaltungsaufbau aus.

In einer zweckmäßigen Weiterbildung ist vorgesehen, dass als Lademittel zumindest ein weiterer Gleichspannungswandler vorgesehen ist. Gerade für Anwendungen, bei denen dieser ohnehin vorhanden ist, kann die Ladefunktion durch diesen mit abgedeckt werden.

In einer zweckmäßigen Weiterbildung ist vorgesehen, das Lademittel Einstellmittel zur Einstellung eines Ladestroms umfasst, vorzugsweise eine Zenerdiode. Damit ist eine besonders einfache und kostengünstige Anpassung an den jeweiligen Anwendungsfall möglich.

Das erfindungsgemäße Verfahren zur Verbindung von Mehrspannungsbordnetzen umfasst zumindest einen Gleichspannungswandler, der ein erstes Bordnetz mit einer ersten Bordnetzspannung mit einem zweiten Bordnetz mit einer zweiten Bordnetzspannung koppeln kann. Zumindest ein Lademittel lädt eine im zweiten Bordnetz vorhandene Zwischenkreiskapazität auf eine Zwischenspannung vor dem Zuschalten eines Energiespeichers zu dem zweiten Bordnetz.

In einer zweckmäßigen Weiterbildung ist vorgesehen, dass bei Erreichen einer Zwischenspannung die Zwischenkreiskapazität durch den Gleichspannungswandler allein oder zusammen mit dem Lademittel weiter geladen wird.

In einer zweckmäßigen Weiterbildung wird zumindest ein zwischen zweitem Bordnetz und Gleichspannungswandler liegendes Schutzelement angesteuert, wenn die Ausgangsspannung des Gleichspannungswandlers näherungsweise der Spannung der Zwischenkreiskapazität entspricht. Der Gleichspannungswandler kann bei diesen Spannungsverhältnissen im sog. Reversebetrieb weiter die Spannung des zweiten Bordnetzes auf das Spannungsniveau des Energiespeichers erhöhen.

In einer zweckmäßigen Weiterbildung wird das Lademittel deaktiviert, wenn die Ausgangsspannung des Gleichspannungswandlers näherungsweise der Spannung der Zwischenkreiskapazität entspricht. Damit kann die Spannung besonders einfach nur durch den Gleichspannungswandler kontrolliert erhöht werden.

In einer zweckmäßigen Weiterbildung wird die Zwischenkreiskapazität durch den Gleichspannungswandler allein oder zusammen mit dem Lademittel auf eine Spannung aufgeladen, die näherungsweise der Ruhespannung des Energiespeichers entspricht. Die Kopplung erfolgt bei nahezu gleichen Spannungsniveaus ohne störende Stromspitzen.

In einer zweckmäßigen Weiterbildung erhöht der Gleichspannungswandler die Spannung der Zwischenkreiskapazität parallel mit dem Lademittel. Eine gezielte Abschaltung der Lademittel kann unterbleiben bei schneller Spannungserhöhung.

Das beschriebene Verfahren bietet zudem die Möglichkeit, während des Aufladens über die Lademittel eine Diagnose des Zwischenkreises zu machen. So lässt sich feststellen, ob ein Kurzschluss nach Masse vorliegt oder ob Leckströme vorliegen. Außerdem lässt sich auch ermitteln, welche Kapazität 20 im Zwischenkreis vorhanden ist. Auch eine Diagnose des gesamten zweiten Bordnetzes ist möglich. Hierzu könnte die Spannung im Zwischenkreis gezielt auf eine bekannte, unkritische Spannung von beispielsweise 20V erhöht werden. Anschließend werden alle Steuergeräte und Komponenten im zweiten Bordnetz über entsprechende Bussysteme abgefragt, ob sie ebenfalls die unkritische Spannung von beispielsweise 20V messen. Erst dann wird die Spannung weiter erhöht und das zweite Bordnetz freigegeben.

Weitere zweckmäßige Weiterbildungen ergeben sich aus weiteren abhängigen Ansprüchen und aus der Beschreibung.

### Zeichnung

Mehrere Ausführungsbeispiele sind in den Figuren dargestellt und werden nachfolgend näher beschrieben.

Es zeigen:
Figur 1 eine erste Bordnetztopologie für ein sogenanntes Boost Recuperation System,
die Figur 2 eine Bordnetztopologie mit Gleichspannungswandler und als DLC ausgeführtem Energiespeicher mit einem Entkopplungselement zwischen Starterkreis und Verbraucherbordnetz,
die Figur 3 ein Ausführungsbeispiel mit zusätzlichem Gleichspannungswandler,
die Figur 4 die schaltungstechnische Realisierung zur Verbindung der beiden Bordnetze,
die Figur 5 den zeitlichen Verlauf eines ersten Hochlaufszenarios zum Verbinden der beiden Bordnetze sowie
die Figur 6 den zeitlichen Verlauf eines zweiten Hochlaufszenarios zum Verbinden der beiden Bordnetze.

### Beschreibung der Ausführungsbeispiele

In zukünftigen Mehrspannungsbordnetzen kommen Gleichspannungswandler bzw. DC/DC-Wandler zum Einsatz, die den Energietransfer zwischen den verschiedenen Bordnetzkreisen 12, 14 mit unterschiedlicher Spannungslage U1, U2 sicherstellen. In der Regel stellt der Gleichspannungswandler 10 die Schnittstelle dar zwischen einem klassischen Verbraucherbordnetz (erstes Bordnetz 12) mit einer ersten Bordnetzspannung U1, übliche Weise 14V, sowie einem weiteren Bordnetzkreis (zweites Bordnetz 14) mit einer gegenüber der ersten Bordnetzspannung U1 höheren zweiten Bordnetzspannung U2, beispielsweise 48V oder 60V.

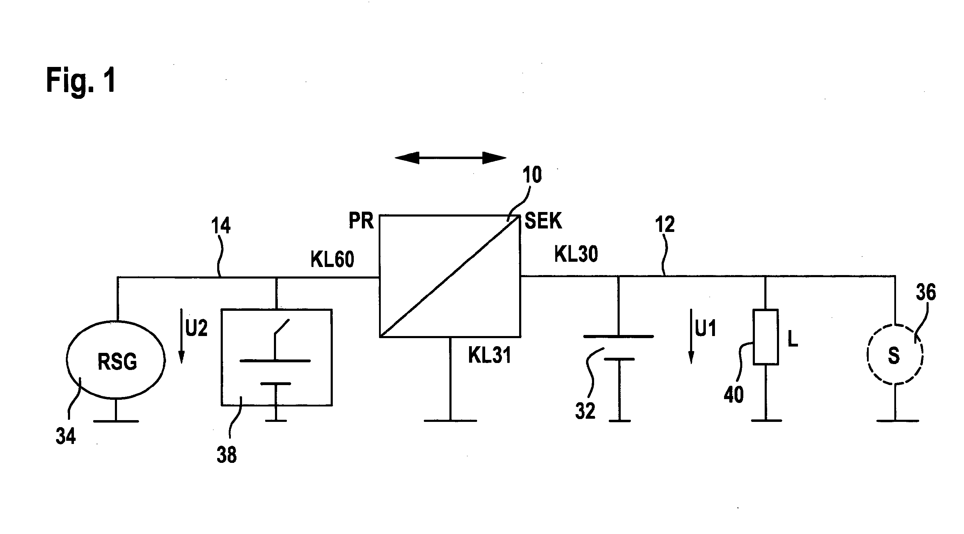

Stellvertretend für eine Vielzahl möglicher Bordnetzarchitekturen werden beispielhaft diejenigen der Figuren 1 bis 3 kurz erläutert.

So zeigt Figur 1 ein sog. Boost Recuperation System mit rückspeisefähgiem Generator 34 (RSG) und einem parallel verschaltetem Energiespeicher 38, beispielsweise ein 48V-Hochleistungsspeicher wie eine Lithium-Ionen-Batterie. Generator 34 und Energiespeicher 38 sind Bestandteile des zweiten Bordnetzes 14 mit einer zweiten Bordnetzspannung U2. Das erste Bordnetz 12 mit der ersten Bordnetzspannung U1 von beispielsweise ca. 12 bzw. 14V umfasst einen gegen Masse geschalteten Starter 36, eine parallel geschaltete Last 40 und eine ebenfalls parallel geschaltete Batterie 32. Ein gegen Masse geschalteter Gleichspannungswandler 10 verbindet das erste Bordnetz 12 mit einem zweiten Bordnetz 14 mit einer gegenüber der ersten Bordnetzspannung U1 höheren zweiten Bordnetzspannung U2, beispielsweise in der Größenordnung von 48V oder 60V. Bei dem Generator 38 kann es sich in einem sog. Boost Recuperation System um einen solchen handeln, der beispielsweise beim Bremsen elektrische Energie in das Bordnetz 14 einspeist.

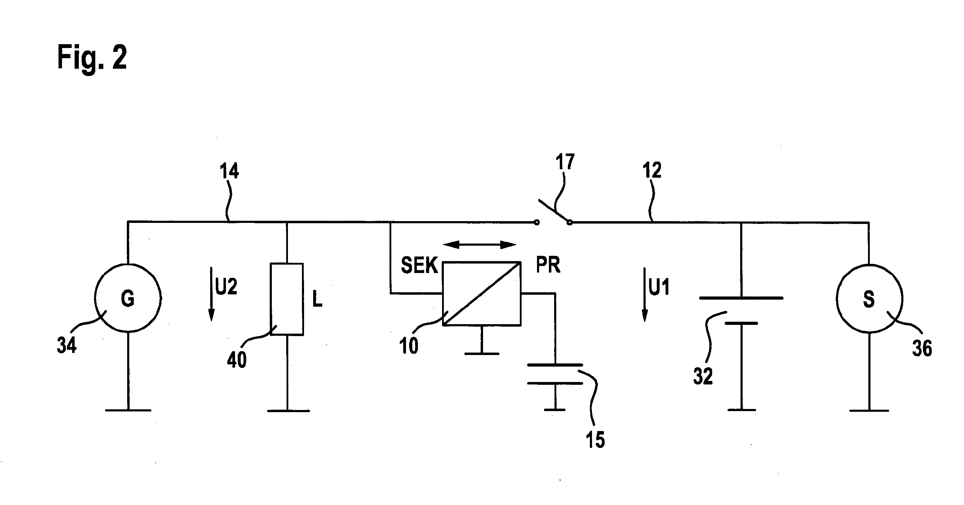

Figur 2 zeigt ein DC/DC-DLC-Modul und Entkopplungselement zwischen Starterkreis und Verbraucher-Bordnetz für ein sog. Start-Stop-Coasting (SSC). Im ersten Bordnetz 12 sind Starter 36 und Batterie 32 parallel verschaltet und über ein Trennmittel 17 wie ein Schalter von dem zweiten Bordnetz 14 entkoppelbar. Im zweiten Bordnetz 14 sind ein Generator 34 und eine Last 40 parallel gegen Masse verschaltet. Die zweite Bordnetzspannung U2 des zweiten Bordnetzes 14 ist der Sekundärseite SEK des Gleichspannungswandlers 10 zugeführt, während die Primärseite PR des Gleichspannungswandlers 10 über einen Kondensator 15 gegen Masse geschaltet ist. Der Kondensator 15 dient als Energiespeicher und ist beispielsweise als Doppelschichtkondensator (DLC) ausgeführt.

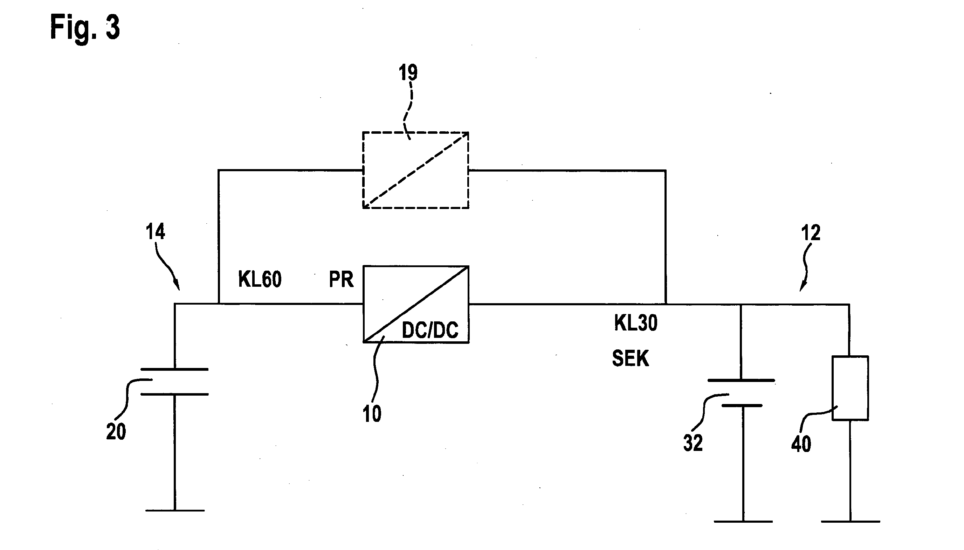

Bei der Topologie nach Figur 3 koppelt der Gleichspannungswandler 10 erstes und zweites Bordnetz 12, 14. Im ersten Bordnetz 12 sind Batterie 32 und Last 40 parallel gegen Masse geschaltet. Im zweiten Bordnetz 14 ist eine Kapazität 20 gegen Masse geschaltet. Parallel zum Gleichspannungswandler 10 verbindet ein weiterer Gleichspannungswandler 19 die beiden Bordnetze 12, 14.

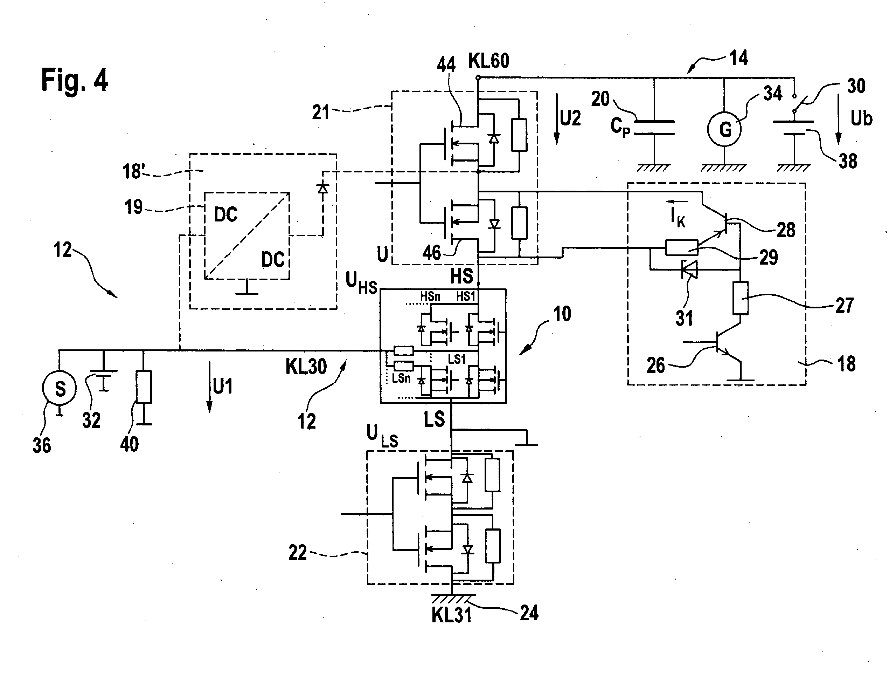

In Fig. 4 ist der typische schaltungstechnische Aufbau eines bidirektionalen Drosseltiefsetzstellers als Beispiel für einen Gleichspannungswandler 10 mit erstem und zweitem Schutzelement 21, 22 und Lademittel 18 gezeigt. Der Gleichspannungswandler 10 ist als n-phasiger, bidirektionaler DrosselTiefsetzsteller ausgeführt. Hierzu sind auf der Höherspannungsseite HS n MOSFET's HS1 bis HSn parallel verschaltet. Deren Drain-Anschlüsse liegen auf demselben Potential und werden über die Klemme HS aus dem Gleichspannungswandler 10 herausgeführt. Zu jedem MOSFET HS1 bis HSn liegen jeweils weitere MOSFET's LS1 bis LSn in Reihe. Deren Source-Anschlüsse liegen auf demselben Potential und werden über die Klemme LS herausgeführt und über das zweite Schutzelement 22 gegen Masse 24 geschaltet über die Klemme KL31. Zwischen den in Reihe geschalteten MOSFET's HS1, LS1; HSn, LSn wird das Potential jeweils über eine Drossel und danach zusammengeführt über die sog. Klemme KL30 mit dem ersten Bordnetz 12 elektrisch kontaktiert.

Auf der Primärseite ist ein erstes Schutzelement 21 zwischen der Klemme HS des Gleichspannungswandler 10 und dem zweiten Bordnetz 14 angeordnet. Der Ausgang des ersten Schutzelements 21 ist als Klemme KL60 herausgeführt. Die Nennspannung bzw. zweite Bordnetzspannung U2 des zweiten Bordnetzes 14 weist eine gegenüber der ersten Bordnetzspannung U1 höhere Nennspannung, beispielsweise 60V auf. In dem zweiten Bordnetz 14 sind Generator 34 und Energiespeicher 32 - beispielsweise eine Batterie - parallel gegen Masse geschaltet. Am Energiespeicher 32 liegt die Spannung Ub an. Der Energiespeicher 32 lässt sich über einen Schalter 30 mit dem zweiten Bordnetzes 14 verbinden. Eine schematisch eingezeichnete Zwischenkreiskapazität 20 des zweiten Bordnetzes 14 resultiert aus den Kapazitäten der mit dem zweiten Bordnetz 14 verbundenen Verbrauchern bzw. elektrischen Baugruppen wie beispielsweise der Generator 34.

Im Massepfad des Gleichspannungswandlers 10 ist das zweites Schutzelement 22 vorgesehen. Die Schutzelemente 21, 22 sind als beispielsweise als Schaltmittel wie Halbleiterschalter, Relais etc. aufgebaut. Im Ausführungsbeispiel handelt es sich um zwei antiparallel verschalteten Halbleiterschalter wie beispielsweise MOSFET's. Damit kann ein unerwünschter Stromfluss zwischen erstem und zweiten Bordnetz 12, 14 im Fehlerfall sicher vermieden, wie er beispielsweise über die intrinsische Diode eines MOSFET's des Gleichspannungswandlers 10 auftreten könnte. Die in den Schutzelementen 21, 22 eingezeichneten Widerstände dienen der Symmetrierung und sind vorzugsweise hochohmig ausgeführt.

Der Gleichspannungswandler 10 ist über die sog. Klemme KL30 mit dem ersten Bordnetz 12 verbunden, welches eine erste Bordnetzspannung U1 beispielsweise in Höhe von 12/14V aufweist. Am ersten Bordnetz 12 sind beispielhaft Starter 36, Energiespeicher 32 und Last 40 angeschlossen.

Gemäß Figur 4 ist ein Lademittel 18 zum Laden der Zwischenkreiskapazität 20 des zweiten Bordnetzes 14 vorgesehen. Beispielhaft ist das Lademittel 18 als Konstantstromquelle aufgebaut. Hierzu dient ein erstes Schaltmittel 26, das beispielhaft als Transistor, im Ausführungsbeispiel als NPN-Transistor, ausgeführt sein kann. Über das erste Schaltmittel 26 wird die Basis des zweiten Schaltmittels 28 angesteuert, im Ausführungsbeispiel als PNP-Transistor ausgeführt. Der Kollektor des ersten Transistors 26 ist über einen Widerstand 27 mit der Basis des zweiten Transistors 28 verbunden. Am Kollektor des zweiten Transistors 28 stellt sich der gewünschte Ladestrom in Form eines Konstantstroms Ik ein. Der Konstantstrom Ik ist dem ersten Schutzelement 21 zugeführt, und zwar zwischen den beiden antiparallel verschalteten Leistungshalbleitern wie beispielsweise MOSFET's. Eine Zenerdiode 31 als Mittel zur Stromeinstellung ist mit der Basis des zweiten Transistors 28 und über einen weiteren Widerstand 29 mit dem Emitter des zweiten Transistors 28 verbunden. Die Zenerdiode 31 und der weitere Widerstand 29 sind außerdem elektrisch leitend mit dem Ausgang des Gleichspannungswandlers 10 bzw. mit dem Eingang des ersten Schutzelements 21 verbunden. Die Zenerdiode 31 ist stromgegengekoppelt zur Einstellung des Konstantstroms Ik, der sich beispielsweise in der Größenordnung von ca. 1A bewegen könnte.

Als alternatives Ladungsmittel 18' könnte ein weiterer Gleichspannungswandler 19 zwischen erstem Bordnetz 12 - über eine Diode verbunden - und erstem Schutzelement 21 vorgesehen werden, der wiederum elektrisch leitend zwischen den beiden in Reihe geschalteten MOSFET's des ersten Schutzelements 21 verbunden ist.

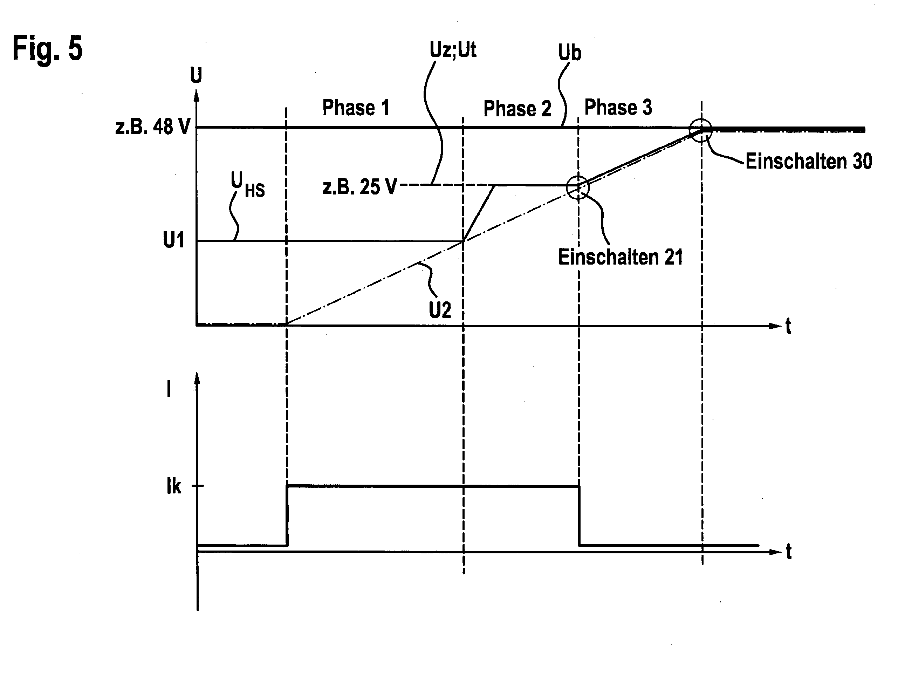

Die Schaltung des Lademittels 18 zum Laden der Zwischenkreiskapazität 20 des zweiten Bordnetzes 14 stellt den wesentlichen Kern der Erfindung dar und soll im nachfolgenden anhand eines typischen Hochlaufszenarios wie in Figur 5 dargestellt erklärt werden.

Im Ruhezustand des Systems sind beide Schutzelemente 21, 22 sowie der Schalter 30 für den Energiespeicher 38 des zweiten Bordnetzes 14 geöffnet. Das zweite Bordnetz 14 ist damit spannungsfrei geschaltet.

Beim Systemstart wird zuerst das zweite Schutzelement 22 des Gleichspannungswandlers 10 geschlossen, um den Gleichspannungswandler 10 mit Masse 24 zu verbinden. Im nächsten Schritt ist vor dem Schließen des Schalters 30 die Spannungslage im zweiten Bordnetz 14 an die Ruhespannung des Energiespeichers 38 des zweiten Bordnetzes 14 anzupassen, damit beim Zuschalten des Energiespeichers 38 auf die vorhandenen Kapazitäten 20 der im zweiten Bordnetz 14 angeschlossenen Komponenten 34 (Summe der Kapazitäten dieser Komponenten bildet die Zwischenkreiskapazität 20) keine Stromspitzen auftreten. Durch Einfügen der Schaltung des Lademittels 18 zum Laden der Zwischenkreiskapazität 20 des zweiten Bordnetzes 14 kann die Funktion einer schaltbaren Konstantstromquelle erreicht werden.

Die Aufladung der Zwischenkreiskapazität 20 gliedert sich wie in Fig. 5 dargestellt in drei Phasen:

Phase 1: Durch die Ansteuerung des ersten Schaltmittels 26 wird das als Konstantstromquelle wirkende Lademittel 18 eingeschaltet. Es fließt ein konstanter Strom Ik. Dieser fließt über die intrinsische Diode des oberen MOSFET's des ersten Schutzelements 21 über die Klemme KL 60 in das zweite Bordnetz 14.

Damit erhöht sich die zweite Bordnetzspannung U2 und damit auch die Spannung an der Zwischenkreiskapazität 20 von 0V bis knapp an die erste Bordnetzspannunng U1 (z.B. 12V, Spannung an KL30), so dass die Zwischenkreiskapazität 20 aufgeladen wird. Das erste Schutzelement 21 bleibt noch geöffnet. Die Spannung U_{HS} am Ausgang HS des Gleichspannungswandlers 10 bleibt konstant auf dem Spannungsniveau der ersten Bordnetzspannung U1 von beispielsweise 12V. Nach der Annäherung der zweiten Bordnetzspannung U2 an die Spannung U_{HS} am Ausgang HS des Gleichspannungswandlers 10 erfolgt der Wechsel von Phase 1 nach Phase 2.

Phase 2: Der Gleichspannungswandler 10 wird bei noch geöffnetem ersten Schutzelement 21 in Betrieb gesetzt und die Spannung U_{HS} am Ausgang HS des Gleichspannungswandlers 10 kontrolliert bis zu einer Zwischenspannung Uz von beispielsweise ca. 25V hochgefahren. Hierzu wird beispielsweise Spannung U_{HS} linear erhöht, bis die Zwischenspannung Zu erreicht wird. Dann bleibt die Spannung U_{HS} auf dem Niveau der Zwischenspannung Uz. Die Konstantstromquelle der Lademittel 18 bleibt eingeschaltet, so dass die Spannung an der Zwischenkreiskapazität 20 bzw. die zweite Bordnetzspannung U2 langsam mitgeführt wird. Phase 2 endet, wenn die zweite Bordnetzspannung U2 die auf dem Niveau der Zwischenspannung Uz verharrende Spannung U_{HS} erreicht. Mithilfe der Lademittel 18 wurde nun das Spannungsniveau der zweiten Bordnetzspannung U2 über das der ersten Bordnetzspannung U1 angehoben. Damit kann der Gleichspannungswandler 10 zur weiteren Spannungserhöhung der zweiten Bordnetzspannung U2 unmittelbar verwendet werden, da nun nicht mehr die Primärspannung unterhalb der Sekundärspannung des Gleichspannungswandlers 10 liegt. Die Lademittel 18 dienen somit gezielt der gewünschten Spannungserhöhung der zweiten Bordnetzspannung U2 in Verbindung mit der Zwischenkreiskapazität 20, die als Spannungsspeicher dient. Erforderlichenfalls wäre ein geeigneter Spannungsspeicher im zweiten Bordnetz 14 durch ein zusätzliches Bauteil vorzusehen.

Phase 3: Sobald sich die Spannung U_{HS} am Ausgang HS und die zweite Bordnetzspannung U2 angenähert haben, wird die erste Schutzschaltung 21 geschlossen. Gleichzeitig wird auch die Konstantstromquelle der Lademittel 18 abgeschaltet. Der Gleichspannungswandler 10 befindet sich nun im aktiven Reversebetrieb. Er erhöht die zweite Bordnetzspannung U2 auf die Ruhespannung Ub des Energiespeichers 38, indem die Zwischenkreiskapazität 20 aufgeladen wird. Sobald Spannungsgleichheit zwischen der Ruhespannung Ub des Energiespeichers 38 des zweiten Bordnetzes 14 und der zweiten Bordnetzspannung U2 erreicht wurde (Ende der Phase 3), kann der Schalter 30 des Energiespeichers 32 ohne Störungen geschlossen werden. Das System ist nun betriebsbereit.

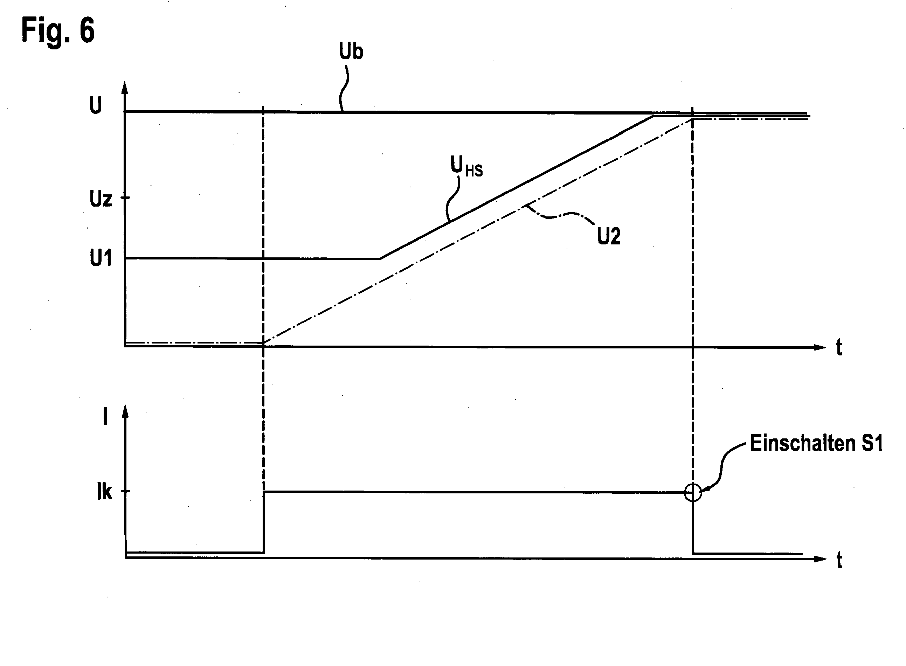

Das alternative Ladeverfahren gemäß Figur 6 unterscheidet sich von demjenigen nach Figur 5 darin, dass das Lademittel 18 auch bei Erreichen der Zwischenspannung Uz von beispielsweise etwas über 25V aktiviert bleibt. Ab diesem Zeitpunkt laden Lademittel 18 und Gleichspannungswandler 10 parallel die Zwischenkreiskapazität 20. Nachdem die zweite Bordnetzspannung U2 an der Zwischenkreiskapazität 20 die Ruhespannung Ub des Energiespeichers 38 erreicht hat, kann der Schalter 30 geschlossen und somit der Energiespeicher 38 zugeschaltet werden.

Wesentlich ist, dass ein mehrstufiges Ladekonzept realisiert wird. In der ersten Phase wird die Zwischenkreiskapazität 20 des zweiten Bordnetzes 14 auf eine Zwischenspannung Uz aufgeladen. Die Zwischenspannung Uz ist so gewählt, dass ab dieser Zwischenspannung Uz der Gleichspannungswandler 10 in der Lage ist, die Zwischenkreiskapazität 20 weiter zu laden. Ist die Zwischenspannung Uz erreicht, die nahe der ersten Bordnetzspannung U1 an Klemme KL30 ist, wird der Gleichspannungswandler 10 zugeschaltet. Die Spannung U_{HS} am Ausgang des Gleichspannungswandlers 10 wird ab diesem Zeitpunkt kontrolliert weiter angehoben, beispielsweise rampenförmig. Der vom Gleichspannungswandler 10 an der Klemme HS abgegebene Strom fließt - die intrinsische Diode des unteren MOSFET's des ersten Schutzmittels 21 sperrt - in die Lademittel 18 und mit dem Ladestrom Ik des Lademittels 18 limitiert über die intrinsische Diode des oberen MOSFET's und die Klemme KL60 in das zweite Bordnetz 14.

Da die Konstantstromquelle 18 eingeschaltet bleibt, wird die Spannung an der Zwischenkreiskapazität 20, die zweite Bordnetzspannung U2, langsam mitgeführt. Erreicht die Spannung U2 an der Zwischenkreiskapazität 20 die Spannung U_{HS} am Gleichspannungswandler 10, kann das ersten Schutzelemente 21 bzw. deren Schaltmittel geschlossen werden, also beide MOSFET's leitend geschaltet werden zur Verbindung der Klemme HS und Klemme KL60. Damit ist sichergestellt, dass keine oder nur sehr geringe Ausgleichsströme fließen. Gemäß Figur 5 wird die Konstantstromquelle 18 nun abgeschaltet. Der Gleichspannungswandler 10 befindet sich im aktiven Reversebetrieb und erhöht die zweite Bordnetzspannung U2 auf die Ruhespannung Ub des Energiespeichers 38 im zweiten Bordnetz 14. Sobald Spannungsgleichheit zwischen zweiter Bordnetzspannung U2 und Ruhespannung Ub besteht, kann der Energiespeicher 38 durch Schließen des Schalters 30 dem zweiten Bordnetz 14 zugeschaltet werden. Das System ist nun bereit für den Normalbetrieb.

Alternativ könnte bei dem Ausführungsbeispiel nach Figur 5 die zweite Bordnetzspannung U2 statt auf die Zwischenspannung Uz bereits auf die Zielspannung Ub angehoben werden. Phase 3 würde dann entfallen.

Besonders bevorzugt eignet sich diese mehrstufige Ansteuerung, da auf die ohnehin vorhandene Überwachungsfunktionalität des Gleichspannungswandlers 10 während der weiteren Spannungserhöhung der zweiten Bordnetzspannung U2 zurückgegriffen werden kann. Hierbei könnte die Spannung, der Strom oder auch der Spannungsanstieg am Ausgang HL des Gleichspannungswandlers 10 überwacht und ggf. auch zu einer Fehlerdiagnose und Schutzfunktion herangezogen werden.

Das beschriebene Verfahren bietet zudem die Möglichkeit, während des Aufladens über die Lademittel eine Diagnose des Zwischenkreises zu machen.

So lässt sich feststellen, ob ein Kurzschluss nach Masse vorliegt oder ob Leckströme vorliegen. Außerdem lässt sich auch ermitteln, welche Kapazität 20 im Zwischenkreis vorhanden ist. Auch eine Diagnose des gesamten zweiten Bordnetzes ist möglich, beispielsweise anhand der Auswertung des Spannungsund/oder Stromverlaufs im Zwischenkreis. Hierzu könnte die zweite Bordnetzspannung U2 im Zwischenkreis gezielt auf eine bekannte, unkritische Spannung Ut von beispielsweise 20V erhöht werden. Anschließend werden alle oder nur gewisse Steuergeräte und Komponenten im zweiten Bordnetz 14 über entsprechende Bussysteme abgefragt, ob sie ebenfalls die unkritische Spannung Ut von beispielsweise 20V messen. Erst dann wird die zweite Bordnetzspannung U2 weiter erhöht und das zweite Bordnetz 14 freigegeben. Eventuell könnte auch die unkritische Spannung Ut mit der Zwischenspannung Uz zusammenfallen.

Aufgrund des geringen Schaltungsaufwands sowie Wirkungsgradvorteilen werden bei derartigen Bordnetzarchitekturen in der Regel bidirektionale DrosselTiefsetzsteller als Gleichspannungswandler 10 eingesetzt wie in Figur 4 schematisch angedeutet. Es könnte ein n-phasiger Gleichspannungswandler 10 mit n jeweils durch zwei Schaltmittel bidirektional ansteuerbaren Drosseln, die sequentiell angesteuert werden, zu Einsatz kommen. Die Verwendung von Vorrichtung und Verfahren sind jedoch hierauf nicht eingeschränkt. Der Drosseltiefsetzsteller kann prinzipbedingt Energie nur von einer höheren Spannungslage (Primärseite) auf eine niedrigere Spannungslage (Sekundärseite) transferieren. Im Falle eines bidirektionalen Drosseltiefsetzsteller kann im Rückwärts- bzw. Reverse-Betrieb alternativ von der niedrigen Spannungslage der Sekundärseite auf eine höhere Spannungslage an der Primärseite Energie gewandelt werden, jedoch darf in keinem Falle die Primärspannung unterhalb der Sekundärspannung liegen. Durch das Vorsehen der Lademittel 18, 18' wird dies sicher erreicht.

Unterschreitet das Potential an Klemme KL60 (zweite Bordnetzspannung U2) das Potential der Klemme KL30 (erste Bordnetzspannung U1) des Gleichspannungswandlers 10, wird eine intrinsische Diode eines nicht näher gezeigten oberen Halbbrückentransistors leitend, so dass sich ein unkontrollierter Stromfluss von KL30 nach KL60 zwischen den beiden Bordnetzen 12, 14 einstellen würde. Um diesen Stromfluss zu verhindern, ist das erste Schutzelement 21 im Klemme KL60-Kreis des Gleichspannungswandlers 10 notwendig, das z.B. als Relais oder anti-paralleler Halbleiterschalter ausgeführt sein kann. In der Regel wird als Schaltelement eine Back-to-Back-Kombination aus zwei anti-parallelen Halbleiterschaltern eingesetzt, was zusätzlich die Möglichkeit bietet, im Falle eines Kurzschlusses des ersten Schaltmittels 26 einen unkontrollierten Stromfluss zwischen den beiden Bordnetzen 12, 14 (von Klemme KL60 nach Klemme KL30) zu verhindern.

Im Ruhezustand des Fahrzeuges wird das zweite Bordnetz 14 aus Sicherheitsgründen durch Öffnen des Schalters 30 von dem Energiespeicher 38 des zweiten Bordnetzes 14 getrennt und somit spannungsfrei geschaltet. Vor Wiederzuschalten dieses Energiespeichers 38 muss aufgrund der vorhandenen Zwischenkreiskapazitäten 20 im zweiten Bordnetz 14 (z.B. Zwischenkreiskapazität 20 des Generators 34) zuerst die zweite Bordnetzspannung U2 kontrolliert angehoben werden, bevor der Schalter 30 geschlossen wird.

Auch beim Einsatz eines bidirektionalen Drosseltiefsetzstellers 10 in Verbindung mit einem Doppelschichtkondensator DLC (auf höherer Spannungslage) beispielsweise im Bordnetz aus Fig. 2 besteht die Notwendigkeit, den Kondensator 15 ausgehend von 0V (komplett entladen) aufzuladen (Beispiele: Erstinbetriebnahme, Wiederinbetriebnahme des Kfz nach längerer Standphase mit abgeklemmter Starterbatterie 32). Da der Drosselwandler (hier: ReverseBetrieb - nur Hochsetzstellen) dazu nicht in der Lage ist, kann das beschriebene Lademittel 18 auch zum Laden des Kondensators 15 von der Spannung 0V bis oberhalb der ersten Bordnetzspannung U1 vorgesehen werden.

Ziel von Vorrichtung und Verfahren ist es, durch einfache Schaltungsmaßnahmen den beispielsweise als bidirektionalen Drosseltiefsetzsteller ausgeführten Gleichspannungswandler 10 zu befähigen, dass im Reversebetrieb (Sekundärseite nach Primärseite) die Aufladung des Energiespeichers 32 auf der Primärseite erfolgen kann, selbst wenn die primärseitige Spannung unterhalb der Sekundärspannung liegt. In diesem Falle können notwendige Zusatzmaßnahmen in anderen Komponenten entfallen und somit Kostenvorteile erzielt werden.

Vorrichtung und Verfahren eignen sich insbesondere für die Kopplung von Mehrspannungsbordnetzen 12, 14 von Kraftfahrzeugen, weil dort immer mehr Hochleistungsverbraucher zum Einsatz kommen. Die Verwendung ist jedoch hierauf nicht eingeschränkt.

## Patentansprüche

1. Vorrichtung zur Verbindung von Mehrspannungsbordnetzen, umfassend zumindest einen Gleichspannungswandler (10), der ein erstes Bordnetz (12) mit einer ersten Bordnetzspannung (U1) mit einem zweiten Bordnetz (14) mit einer zweiten Bordnetzspannung (U2) koppeln kann, **dadurch gekennzeichnet, dass** zumindest ein Lademittel (18) vorgesehen ist zum Erhöhen der zweiten Bordnetzspannung (U2) vor dem Zuschalten eines Energiespeichers (38) zur Speisung des zweiten Bordnetzes (14).

2. Vorrichtung nach Anspruch 1, **dadurch gekennzeichnet, dass** das Lademittel (18) die zweite Bordnetzspannung (U2) erhöht, indem es eine im zweiten Bordnetz (14) vorhandene Zwischenkreiskapazität (20) lädt.

3. Vorrichtung nach einem der vorhergehenden Ansprüche, **dadurch gekennzeichnet, dass** das Lademittel (18) die zweite Bordnetzspannung (U2) zumindest auf eine Zwischenspannung (Uz) erhöht, bei der der Gleichspannungswandler (10) zur weiteren Spannungserhöhung der zweiten Bordnetzspannung (U2) zugeschaltet wird.

4. Vorrichtung nach einem der vorhergehenden Ansprüche, **dadurch gekennzeichnet, dass** zwischen dem Gleichspannungswandler (10) und dem zweiten Bordnetz (14) zumindest ein Schutzelement (21) angeordnet ist, insbesondere zwei antiparallel verschaltete Halbleiterschalter.

5. Vorrichtung nach einem der vorhergehenden Ansprüche, **dadurch gekennzeichnet, dass** das Lademittel (18) zumindest teilweise über das Schutzelement (21) einen Ladestrom (Ik) dem zweiten Bordnetz (14) zuführt.

6. Vorrichtung nach einem der vorhergehenden Ansprüche, **dadurch gekennzeichnet, dass** das Schutzelement (21) geschlossen wird, wenn die zweite Bordnetzspannung (U2) in etwa die Spannung (U_{HS}) an dem Ausgang (HS) des Gleichspannungswandlers (10) erreicht, der mit dem zweiten Bordnetz (14) verbunden werden kann.

7. Vorrichtung nach einem der vorhergehenden Ansprüche, **dadurch gekennzeichnet, dass** ein Schalter (30) vorgesehen ist, über den ein Energiespeicher (38) mit dem zweiten Bordnetz (14) verbunden wird, wenn die zweite Bordnetzspannung (U2) in etwa einer Ruhespannung (Ub) des Energiespeichers (38) entspricht.

8. Verfahren zur Verbindung von Mehrspannungsbordnetzen, umfassend zumindest einen Gleichspannungswandler (10), der ein erstes Bordnetz (12) mit einer ersten Bordnetzspannung (U1) mit einem zweiten Bordnetz (14) mit einer zweiten Bordnetzspannung (U2) koppeln kann, **dadurch gekennzeichnet, dass** zumindest ein Lademittel (18) die zweite Bordnetzspannung (U2) erhöht vor dem Zuschalten eines Energiespeichers (38) zur Speisung des zweiten Bordnetzes (14).

9. Verfahren nach dem vorhergehenden Verfahrensanspruch, **dadurch gekennzeichnet, dass** das Lademittel (18) eine im zweiten Bordnetz (14) vorhandene Zwischenkreiskapazität (20) zur Erhöhung der zweiten Bordnetzspannung (U2) lädt.

10. Verfahren nach einem der vorhergehenden Verfahrensansprüche, **dadurch gekennzeichnet, dass** die zweite Bordnetzspannung (U2) bei Erreichen einer Zwischenspannung (Uz), die größer ist als die erste Bordnetzspannung (U1), die zweite Bordnetzspannung (U2) durch den Gleichspannungswandler (10) und/oder das Lademittel (18) weiter erhöht wird.

11. Verfahren nach einem der vorhergehenden Verfahrensansprüche, **dadurch gekennzeichnet, dass** das Lademittel (18) die zweite Bordnetzspannung (U2) auf eine bestimmte Spannung (Ut) erhöht wird, bei der zumindest ein am zweiten Bordnetz (14) angeschlossener Verbraucher (34) oder das zweite Bordnetz (14) selbst auf ordnungsgemäßen Betrieb überprüft wird.

12. Verfahren nach einem der vorhergehenden Verfahrensansprüche, **dadurch gekennzeichnet, dass** zumindest ein zwischen zweitem Bordnetz (14) und Gleichspannungswandler (10) liegendes Schutzelement (21) angesteuert wird, wenn eine Spannung (U_{HS}) an einem mit dem zweiten Bordnetz (14) verbindbaren Ausgang (HS) des Gleichspannungswandler (10) näherungsweise der zweiten Bordnetzspannung (U2) entspricht.

13. Verfahren nach einem der vorhergehenden Verfahrensansprüche, **dadurch gekennzeichnet, dass** das Lademittel (18) deaktiviert wird, wenn eine Spannung (U_{HS}) an einem mit dem zweiten Bordnetz (14) verbindbaren Ausgang (HS) des Gleichspannungswandler (10) näherungsweise der zweiten Bordnetzspannung (U2) entspricht.

14. Verfahren nach einem der vorhergehenden Verfahrensansprüche, **dadurch gekennzeichnet, dass** die zweite Bordnetzspannung (U2) durch den Gleichspannungswandler (10) und/oder das Lademittel (18) auf eine Ruhespannung (Ub) eines dem zweiten Bordnetz (14) zuschaltbaren Energiespeichers (38) erhöht wird.

15. Verfahren nach einem der vorhergehenden Verfahrensansprüche, **dadurch gekennzeichnet, dass** der Energiespeicher (38) mit dem zweiten Bordnetz (14) verbunden wird, wenn die zweite Bordnetzspannung (U2) näherungsweise der Ruhespannung (Ub) des Energiespeichers (38) entspricht.

## Claims

1. Apparatus for connecting multiple-voltage onboard power supply systems, comprising at least one DC-DC converter (10) that is able to connect a first onboard power supply system (12) having a first onboard power supply system voltage (U1) to a second onboard power supply system (14) having a second onboard power supply system voltage (U2), **characterized in that** at least one charging means (18) is provided for increasing the second onboard power supply system voltage (U2) before connecting an energy storage (38) for supplying the second onboard power supply system (14).

2. Apparatus according to Claim 1, **characterized in that** the charging means (18) increases the second onboard power supply system voltage (U2) by charging an intermediate circuit capacitance (20) that is present in the second onboard power supply system (14).

3. Apparatus according to one of the previous claims, **characterized in that** the charging means (18) increases the second onboard power supply system voltage (U2) at least to an intermediate voltage (Uz), at which the DC-DC converter (10) is connected for further increasing the voltage of the second onboard power supply system voltage (U2).

4. Apparatus according to one of the previous claims, **characterized in that** at least one protective element (21) is arranged between the DC-DC converter (10) and the second onboard power supply system (14), in particular, two semiconductor switches that are connected inversely parallel to each other.

5. Apparatus according to one of the previous claims, **characterized in that** the charging means (18) at least partially supplies a charging current (Ik) to the second onboard power supply system (14) via the protective element (21).

6. Apparatus according to one of the previous claims, **characterized in that** the protective element (21) is closed if the second onboard power supply system voltage (U2) approximately reaches the voltage (U_{HS}) at the output (HS) of the DC-DC converter (10), which can be connected to the second onboard power supply system (14).

7. Apparatus according to one of the previous claims, **characterized in that** a switch (30) is provided via which an energy storage (38) is connected to the second onboard power supply system (14) if the second onboard power supply system voltage (U2) approximately corresponds to an open-circuit voltage (Ub) of the energy storage (38).

8. Method for connecting multiple-voltage onboard power supply systems, comprising at least one DC-DC converter (10) that is able to connect a first onboard power supply system (12) having a first onboard power supply system voltage (U1) to a second onboard power supply system (14) having a second onboard power supply system voltage (U2), **characterized in that** at least one charging means (18) increases the second onboard power supply system voltage (U2) before connecting an energy storage (38) for supplying the second onboard power supply system (14).

9. Method according to the previous method claim, **characterized in that** the charging means (18) charges an intermediate circuit capacitance (20) that is present in the second onboard power supply system (14) in order to increase the second onboard power supply system voltage (U2).

10. Method according to one of the previous method claims, **characterized in that** the second onboard power supply system voltage (U2), upon reaching an intermediate voltage (Uz) that is larger than the first onboard power supply system voltage (U1), continues to be increased via the DC-DC converter (10) and/or the charging means (18).

11. Method according to one of the previous method claims, **characterized in that** the charging means (18) increases the second onboard power supply system voltage (U2) to a specified voltage (Ut), at which at least one consumer (34) connected to the second onboard power supply system (14) or the second onboard power supply system (14) itself is checked for proper operation.

12. Method according to one of the previous method claims, **characterized in that** at least one protective element (21) located between the second onboard power supply system (14) and the DC-DC converter (10) is activated if a voltage (U_{HS}) at an output (HS) of the DC-DC converter (10) that can be connected to the second onboard power supply system (14) corresponds approximately to the second onboard power supply system voltage (U2).

13. Method according to one of the previous method claims, **characterized in that** the charging means (18) is deactivated if a voltage (U_{HS}) at an output (HS) of the DC-DC converter (10) that can be connected to the second onboard power supply system (14) corresponds approximately to the second onboard power supply system voltage (U2).

14. Method according to one of the previous method claims, **characterized in that** the second onboard power supply system voltage (U2) is increased to an open-circuit voltage (Ub) of an energy storage (38) that can be connected to the second onboard power supply system (14) via the DC-DC converter (10) and/or the charging means (18).

15. Method according to one of the previous method claims, **characterized in that** the energy storage (38) is connected to the second onboard power supply system (14) if the second onboard power supply system voltage (U2) corresponds approximately to the open-circuit voltage (Ub) of the energy storage (38).

## Revendications

1. Dispositif pour relier un réseau de bord à plusieurs tensions, le dispositif comprenant au moins un convertisseur (10) de tension continue qui peut raccorder un premier réseau de bord (12) qui présente une première tension (U1) de réseau de bord à un deuxième réseau de bord (14) qui présente une deuxième tension (U2) de réseau de bord,
**caractérisé en ce que**
au moins un moyen de chargement (18) est prévu pour augmenter la deuxième tension (U2) de réseau de bord avant le raccordement d'un accumulateur d'énergie (38) qui alimente le deuxième réseau de bord (14).

2. Dispositif selon la revendication 1, **caractérisé en ce que** le moyen de chargement (18) augmente la deuxième tension (U2) de réseau de bord en chargeant une capacité (20) de circuit intermédiaire prévue dans le deuxième réseau de bord (14).

3. Dispositif selon l'une des revendications précédentes, **caractérisé en ce que** le moyen de chargement (18) augmente la deuxième tension (U2) de réseau de bord au moins à une tension intermédiaire (Uz) à laquelle le convertisseur (10) de tension continue est branché en vue de poursuivre l'augmentation de la deuxième tension (U2) de réseau de bord.

4. Dispositif selon l'une des revendications précédentes, **caractérisé en ce qu'**entre le convertisseur (10) de tension continue et le deuxième réseau de bord (14) est disposé au moins un élément de protection (21), en particulier constitué de deux commutateurs à semi-conducteur raccordés de manière antiparallèle.

5. Dispositif selon l'une des revendications précédentes, **caractérisé en ce que** le moyen de chargement (18) amène un courant de charge (Ik) au deuxième réseau de bord (14) au moins en partie par l'intermédiaire de l'élément de protection (21).

6. Dispositif selon l'une des revendications précédentes, **caractérisé en ce que** l'élément de protection (21) est fermé lorsque la deuxième tension (U2) de réseau de bord atteint sensiblement la tension (U_{HS}) appliquée à la sortie (HS) du convertisseur (10) de tension continue qui peut être raccordé au deuxième réseau de bord (14).

7. Dispositif selon l'une des revendications précédentes, **caractérisé en ce qu'**il présente un commutateur (30) par lequel un accumulateur d'énergie (38) est raccordé au deuxième réseau de bord (14) lorsque la deuxième tension (U2) de réseau de bord correspond sensiblement à la tension de repos (Ub) de l'accumulateur d'énergie (38).

8. Procédé pour raccorder des réseaux de bord à tensions différentes, comprenant au moins un convertisseur (10) de tension continue qui peut raccorder un premier réseau de bord (12) présentant une première tension (U1) de réseau de bord à un deuxième réseau de bord (14) présentant une deuxième tension (U2) de réseau de bord,
**caractérisé en ce que**
au moins un moyen de chargement (18) augmente la deuxième tension (U2) de réseau de bord avant le branchement d'un accumulateur d'énergie (38) qui alimente le deuxième réseau de bord (14).

9. Procédé selon la revendication précédente, **caractérisé en ce que** le moyen de chargement (18) charge une capacité (20) de circuit intermédiaire prévue dans le deuxième réseau de bord (14) pour augmenter la deuxième tension de bord (U2).

10. Procédé selon l'une des revendications précédentes de procédé, **caractérisé en ce que** la deuxième tension (U2) de tension de bord est encore augmentée par le convertisseur (10) de tension continue et/ou le moyen de chargement (18) lorsqu'une tension intermédiaire (Uz) supérieure à la première tension (U1) de réseau de bord est atteinte.

11. Procédé selon l'une des revendications précédentes de procédé, **caractérisé en ce que** le moyen de chargement (18) augmente la tension (U2) du deuxième réseau de bord à une tension (Ut) définie à laquelle le bon fonctionnement du ou des consommateurs (34) raccordés au deuxième réseau de bord (14) ou le deuxième réseau de bord (14) est vérifié.

12. Procédé selon l'une des revendications précédentes de procédé, **caractérisé en ce qu'**au moins un élément de protection (21) situé entre le deuxième réseau de bord (14) et le convertisseur (10) de tension continue est commandé lorsqu'une tension (U_{HS}) appliquée sur une sortie (HS) du convertisseur (10) de tension continue qui peut être raccordée au deuxième réseau de bord (14) correspond approximativement à la deuxième tension (U2) de réseau de bord.

13. Procédé selon l'une des revendications précédentes de procédé, **caractérisé en ce que** le moyen de chargement (18) est désactivé si une tension (U_{HS}) appliquée sur une sortie (HS) du convertisseur (10) de tension continue raccordée au deuxième réseau de bord (14) correspond approximativement à la deuxième tension (U2) de réseau de bord.

14. Procédé selon l'une des revendications précédentes de procédé, **caractérisé en ce que** la tension deuxième (U2) de réseau de bord est augmentée à une tension de repos (Ub) d'un accumulateur d'énergie (38) apte à être raccordé au deuxième réseau de bord (14) par l'intermédiaire du convertisseur (10) de tension continue et/ou du moyen de chargement (18).

15. Procédé selon l'une des revendications précédentes de procédé, **caractérisé en ce que** l'accumulateur d'énergie (38) est raccordé au deuxième réseau de bord (14) lorsque la deuxième tension (U2) de réseau de bord correspond approximativement à la tension de repos (Ub) de l'accumulateur d'énergie (38).
